# EUROPÄISCHE PATENTANMELDUNG

(11) **EP 1 284 396 A1**
(43) Veröffentlichungstag der Anmeldung: **19.02.2003**
(21) Anmeldenummer: 01119529.4
(22) Anmeldetag: 14.08.2001
(51) Int. Cl.: F24J 2/46

(54) **Sonnenkollektorrahmenprofil**

(71) Anmelder: GeySol AG, 56424 Moschheim (DE)
(72) Erfinder: Gey, Christof, 20253 Hamburg (DE)
(74) Vertreter: Grünecker, Kinkeldey, Stockmair & Schwanhäusser Anwaltssozietät

(57) **Zusammenfassung**

Die Vorliegende Erfindung betrifft das Gebiet der Sonnenkollektoren. Im Hinblick auf eine möglichst einfache Abdichtung gegenüber einer Bedachung, auf der Kollektormodule angeordnet sind, wird mit der vorliegenden Erfindung ein Kollektorrahmenprofil vorgeschlagen, welches eine untere Anlagefläche (2) sowie zwei sich hierzu im wesentlichen rechtwinklig erstreckende Profilseiten (4,6) aufweist. Die äußere Profilseite (4) weist zwei übereinander angeordnete Einschubschlitze (24,28) für Abdichtbleche auf. An der inneren Profilseite (6) ist eine Dichtlippenhaltenut (18) vorgesehen. Ein aus diesem Kollektorrahmenprofil gebildeter, ein kollektormodul umgebender Rahmen ermöglicht einen leichten Anschluss des Kollektors an die Bedachung.

## Beschreibung

Die vorliegende Erfindung betrifft das Gebiet der Nutzung von Sonnenenergie. Sonnenkollektoren, wie beispielsweise Röhrenkollektoren werden häufig auf dem Dach eines Gebäudes angeordnet. Mehrere einzelne Kollektormodule werden dabei als Teil einer Solaranlage regelmäßig nebeneinander auf dem Dach angeordnet. Hier besteht das Problem, den Bereich zwischen den einzelnen Modulen derart abzudichten, dass auftreffendes Regenwasser abgeführt wird. Auch müssen die Module gegen über das Dach geführtes Regenwasser abgedichtet werden. Insbesondere zwischen benachbart angeordneten Modulen erfordert dies üblicher Weise Spenglerarbeiten. Hierbei werden Blechteile individuell an die jeweiligen Zwischenräume zwischen den einzelnen Modulen angepasst.

Mit der vorliegenden Erfindung soll den vorstehend beschriebenen Problemen bei der Abdichtung von auf Dächern angeordneten Kollektormodulen begegnet werden. Der vorliegenden Erfindung liegt die Aufgabe zugrunde, ein vereinfachtes Abdichten der Sonnenkollektoren gegenüber Regenwasser sowie eine verbesserte Führung von fließendem Regenwasser zu ermöglichen.

Zur Lösung des obigen Problems wird der vorliegenden Erfindung ein Kollektorrahmenprofil mit den Merkmalen von Anspruch 1 vorgeschlagen. Das erfindungsgemäße Kollektorrahmenprofil hat eine im wesentlichen rechteckige Grundform mit einer unteren Anlagefläche, einer sich hierzu im wesentlichen rechtwinklig erstreckenden äußeren und einer im wesentlichen sich rechtwinklig zu der Anlagefläche erstreckenden inneren Profilseite. Die äußere Profilseite hat zwei sich seitlich öffnende Einschubschlitze, die übereinander angeordnet sind. In diese Einschubschlitze werden Bleche eingesetzt, welche der Führung von Regenwasser dienen. In dem entfernt von der Anlagefläche ausgebildeten Einschubschlitz ist ein Blech einschiebbar, welches den Freiraum zwischen zwei auf einer Dachfläche nebeneinander angeordneten Kollektormodulen abdeckt. In den unteren Einschubschlitz ist ein Abdeckblech einschiebbar durch das Kollektormodul an seiner Unterseite an der Dachabdeckung angeschlossen wird. Dieses Blechstück überdeckt üblicher Weise die Oberkante der sich in Fallrichtung fortsetzenden Dachabdeckung, beispielsweise einer Reihe von Dachziegeln.

Bei dem erfindungsgemäßen Kollektorrahmenprofil ist an der inneren Profilseite mit Abstand zu der Anlagefläche eine sich seitlich öffnende Dichtlippenhaltenut ausgebildet. In dieser wird eine Dichtlippe gehalten, welche dichtend gegen eine Oberfläche des Kollektormoduls, beispielsweise die Oberfläche eines Reflektors im Falle eines Röhrenkollektors anliegt, wodurch verhindert wird, dass Regenwasser zwischen einen von dem Kollektorrahmenprofil gebildeten Rahmen und einem innerhalb des Rahmens aufgenommenen Reflektor eindringt.

Ferner weist das erfindungsgemäße Kollektorrahmenprofil eine obere Abdeckfläche auf, welche den entfernt von der Anlagefläche angeordneten, oberen Einschubschlitz sowie den Dichtlippenhalteschlitz überragt. Auf diese Abdeckfläche auftreffendes Wasser wird entweder zur inneren Profilseite abgeleitet und dort über eine in dem Dichtlippenhalteschlitz angeordnete Dichtlippe, die zumindest an den sich in Fallrichtung erstreckenden Längsseiten des Reflektors vorgesehen ist, auf die Oberfläche des Kollektors oder aber zu der äußeren Profilseite abgeführt. Sofern auf die Abdeckfläche auftreffendes Regenwasser seitlich, d.h. quer zur Fallrichtung abgeleitet wird, trifft dieses auf ein die oberen Einschubschlitze benachbarter Rahmen verbindendes Blechteil und wird über dieses weiter nach unten geleitet. Wird auf die Abdeckfläche treffendes Regenwasser an der Unterseite eines durch das Kollektorrahmenprofil gebildeten Rahmens nach außen geleitet, so trifft dieses Wasser auf ein Blechteil, welches in dem unteren Einschubschlitz gehalten ist. Regenwasser, welches auf einem seitlichen, in dem oberen Einschubschlitz gehaltenen Blech geführt wird, trifft regelmäßig an der Unterseite des Rahmens auf ein in dem unteren Einschubschlitz gehaltenes Blech und wird erst über dieses auf die Oberfläche der Dachabdeckung abgeleitet.

Mit dem erfindungsgemäßen Kollektorrahmenprofil kann ein Rahmen ausgebildet werden, der besonders einfach an der Außenseite an eine bestehende Dachabdeckung angeschlossen werden kann. Im Falle mehrerer nebeneinander angeordneter Kollektormodule mit jeweils die Module umgebenden Rahmen werden in den oberen Einschubschlitzen der jeweils äußeren Profilseite vorgefertigte Bleche aufgenommen, durch welche zwei benachbart zueinander angeordnete Module zu einer insgesamt dichten Einheit verbunden werden. Durch Einschieben eines Bleches in den unteren Einschubschlitz der äußeren Profilseite erfolgt der Anschluss an der Unterseite des Kollektormoduls bzw. mehrerer nebeneinander angeordneter Kollektormodule. Der Dichtlippenhalteschlitz erlaubt die Abdichtung eines von dem Rahmen umgebenen Kollektormoduls durch Einschieben einer Dichtlippe in den Halteschlitz. Es ergibt sich, dass mit dem erfindungsgemäßen Kollektorrahmenprofil ein Rahmen gebildet werden kann, der sich leicht und bei Verwendung von vorgefertigten Blechteilen dichtend an eine Dachfläche angeschlossen werden kann.

Im Hinblick auf eine möglichst einfache Herstellung und ein einfaches Einschieben in die Schlitze wird gemäß einer bevorzugten Weiterbildung der vorliegenden Erfindung vorgeschlagen, dass die Einschubschlitze sowie der Dichtlippenhalteschlitz sich im wesentlich parallel zu der unteren Anlagefläche erstrecken.

Zur Befestigung eines Kollektormoduls hat das erfindungsgemäße Kollektorrahmenprofil vorzugsweise eine sich zu der Anlagefläche öffnende Befestigungsnut. Mit dieser Befestigungsnut sind Befestigungselemente in Eingriff bringbar, durch die das Modul zusammen mit dem Rahmen auf einfache Weise an dem Dach befestigt werden kann.

Zur sicheren Anlage und Befestigung an ein Kollektormodul weist das Kollektorrahmenprofil gemäß einer bevorzugten Weiterbildung der vorliegenden Erfindung eine die innere Profilseite überragenden Steg auf, welcher die Anlagefläche fortsetzt und welcher mit einem Teilbereich der inneren Profilseite eine L-förmige Anlagefläche ausbildet. Über diese L-förmige Anlagefläche kann ein Kollektormodul sicher mit dem Rahmen an dessen Innenseite verbunden werden.

Im Hinblick auf eine möglichst leichte und werkzeugfreie Befestigung von Blechen zur Abdichtung gegenüber der Dachfläche wird gemäß einer weiteren bevorzugten Ausgestaltung der vorliegenden Erfindung vorgeschlagen, dass die Einschubschlitze an ihrer Öffnung eine Rastnase aufweisen. Mit dieser Rastnase werden die Bleche gegenüber dem Rahmen verrastet und sind so unverlierbar an dem Rahmen gehalten.

Vorzugsweise werden auf der Abdeckfläche im Fall von Röhrenkollektoren Auflagen montiert, welche jeweils einen der Kollektorröhren halten. Im Hinblick auf die hierzu erforderliche Befestigung der Auflagen an dem Rahmen wird gemäß einer bevorzugten Weiterbildung der vorliegenden Erfindung vorgeschlagen, dass die Abdeckfläche eine Aufnahmerinne aufweist. In dieser Aufnahmerinne können die Halterungen eingesetzt werden. Vorzugsweise sind die Halterungen aus einem gebogenen Blechstreifen gebildet, wobei die Aufnahmerinne derart dimensioniert ist, dass das Blechprofil in die Aufnahmerinne einpassbar ist.

Gemäß einem alternativen Lösungsvorschlag weist die Abdeckfläche einen sich zu dieser öffnenden Haltschlitz auf. Der Halteschlitz ist wesentlich tiefer als die Rinne ausgebildet und erlaubt das Einbringen von Schrauben oder anderen Befestigungsmitteln in den Schlitz. Durch derartige Befestigungsmittel kann die Halterung für die Kollektorröhren an dem Rahmenprofilteil, genauer gesagt an der Unterseite eines aus dem Kollektorrahmenprofilteil gebildeten Rahmens befestigt werden.

Im Hinblick auf die Verwendung von Schrauben zum Einbringen in den Halteschlitz wird gemäß einer bevorzugten Weiterbildung vorgeschlagen, dass die sich gegenüberliegenden Seitenwände des Halteschlitzes gezackt profiliert sind. Bei einer derartigen Ausbildung können in den Schlitz eingeschraubte Schrauben besser greifen.

Im Hinblick auf eine bessere Befestigung gegenüber einer Dachfläche wird bei einer weiteren bevorzugten Ausgestaltung des erfindungsgemäßen Kollektorrahmenprofils zwischen den zwei Einschubschlitzen und der unteren Anlagefläche eine sich zu der äußeren Profilleiste öffnende Ausnehmung vorgesehen. In dieser Ausnehmung können weitere Haltemittel eingreifen, beispielsweise an der Unterseite eines Rahmens, um den Rahmen an einer Dachschräge zu halten.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Figur 1: ein erstes Ausführungsbeispiel eines erfindungsgemäßen Kollektorrahmenprofils und
- Figur 2: ein zweites Ausführungsbeispiel eines erfindungsgemäßen Kollektorrahmenprofils.

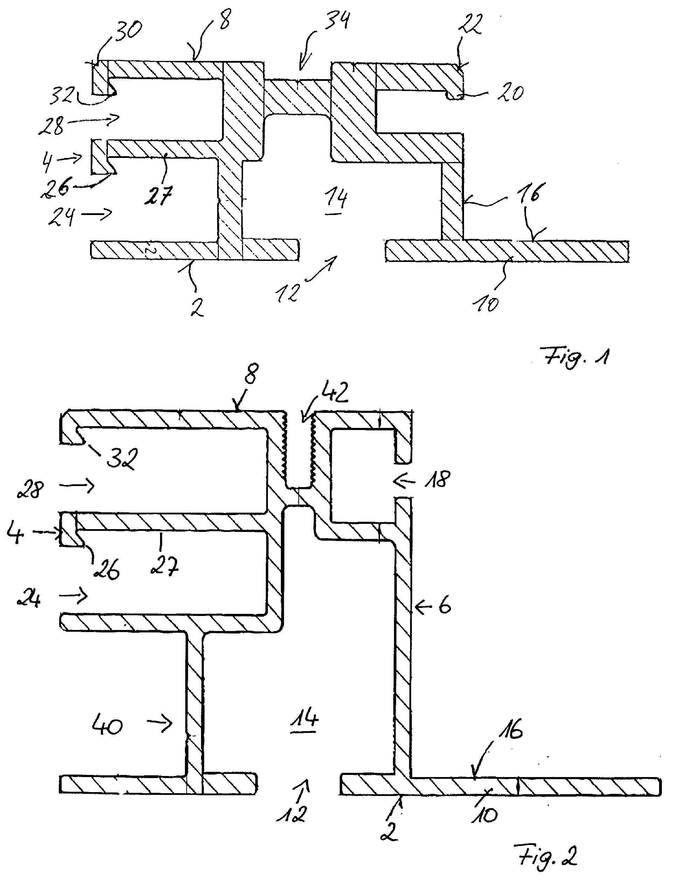

In Figur 1 ist ein erstes Ausführungsbeispiel eines erfindungsgemäßen Kollektorrahmenprofils gezeigt. Das Kollektorrahmenprofil hat eine untere Anlagefläche 2, eine äußere Profilseite 4 und eine innere Profilseite 6. Das gezeigte Kollektorrahmenprofil hat eine im wesentlichen rechteckige Querschnittsform, die eine sich parallel zu der Anlagefläche 2 erstreckende Abdeckfläche 8 ausbildet.

Die Anlagefläche ist eben und setzt sich zu der inneren Profilseite 6 in einem Steg 10 fort. Die untere Wandung des Steges 10 liegt in einer Ebene mit der unteren Anlagefläche 2. Die Anlagefäche ist benachbart zu dem Steg 10 durch eine Befestigungsnut 12 durchbrochen, die in einen Befestigungskanal 14 mündet, dessen Breitenabmessung größer als die Breite der Nut 12 ist. Benachbart zu der oberen Fläche des Stegs 10 ist die innere Profilseite eben ausgeformt. Diese innere Profilseite bildet zusammen mit der oberen Oberfläche des Steges 10 eine L-förmige Anlagefläche 16 für ein hier nicht dargestelltes Kollektormodul aus. Oberhalb des an der inneren Profilseite 6 ausgebildeten Wandungsabschnitts der L-förmigen Anlagefläche 16 befindet sich eine sich zu der inneren Profilseite 6 öffnende Dichtlippenhaltenut 18. Die Öffnung der Dichtlippenhaltenut 18 wird durch einen an der Oberseite angeordneten Vorsprung 20 verengt, dessen Außenfläche Teil der inneren Profilseite 6 ist. Über eine Abflachung 22 geht die innere Profilseite 6 in die Abdeckfläche 8 über.

An der äußeren Profilseite 4 ist benachbart zu der unteren Anlagefläche 2 ein unterer Einschubschlitz 24 ausgebildet. Dieser Einschubschlitz 24 weist an seiner Öffnung zu der äußeren Profilseite 4 eine Rastnase 26 auf. Diese Rastnase 26 ist an dem vorderen Ende einer Wandung 27 vorgesehen, welche den unteren Einschubschlitz 24 von einem oberen Einschubschlitz 28 trennt. Der obere Einschubschlitz 28 wiederum wird oberseitig durch die Abdeckfläche 8 begrenzt, die über eine Abflachung 30 in die äußere Profilseite übergeht und dort eine Rastnase 32 trägt. Die Rastnase 32 verengt wie die Rastnase 26 die Öffnung des Einschubschlitzes, hier des oberen Einschubschlitzes 28.

Die Abdeckfläche 8 weist bei dem in Figur 2 gezeigten Ausführungsbeispiel eine Aufnahmerinne 34 auf. Die Aufnahmerinne 34 ist verhältnismäßig flach und hat etwa die Dicke der den oberen Einschubschlitz 28 oberseitig abdeckenden Wandung. In diese Aufnahmerinne 34 kann ein Blechstreifen eingesetzt werden, durch welchen eine Halterung für Kollektorröhren eines Röhrenkollektors gebildet ist.

Wird aus einem Kollektorrahmenprofil gemäß dem in Figur 1 gezeigten Ausführungsbeispiel ein Rahmen gebildet, durch den ein Kollektormodul umfänglich umgeben wird, so werden die verschiedenen Funktionsbereiche des Kollektorrahmenprofils wie folgt belegt: An den seitlichen Rändern des Rahmens werden in die Dichtlippenhaltenut 18 Dichtungen eingesetzt, die dichtend an der Oberseite eines Reflektors des Kollektormoduls anliegen. In den unteren Einschubschlitz 24 wird an der Unterseite eines auf eine Dachschräge aufgesetzten Rahmens ein Blechstreifen eingesetzt, der derart ausgebildet ist, dass er mit der Rastnase 26 zusammenwirkt. Dieser Blechstreifen bildet den Anschluss des Kollektormoduls mit Rahmen an der Unterseite des Moduls. Sind mehrere Kollektormodule, die jeweils von einem Rahmen umgeben sind, nebeneinander angeordnet, so werden die seitlichen Ränder der Rahmen über Bleche miteinander verbunden, welche in den jeweils oberen Einschubschlitz 28 eingeschoben werden. Auch hier erfolgt vorzugsweise eine Verrastung des Bleches über die Rastnasen 32. An der Oberseite des Rahmens wird die Dachabdeckung entweder mit einem Blech an das Rahmenprofil angeschlossen, so dass von oben kommendes Wasser auf die Oberseite des Reflektors gelangt. Alternativ kann auf der Abdeckfläche des Rahmenprofils eine Profilierung vorgesehen sein, in welche Haltenuten von Dachziegeln eingesetzt werden können. Die letzte Reihe der Dachziegeln oberhalb des Kollektormoduls liegt dann auf der Oberseite des Rahmens auf. Strömendes Regenwasser gelangt von diesen Dachziegeln unmittelbar auf die Oberfläche des Kollektormoduls.

Das Kollektormodul liegt über die L-förmige Anlagefläche 16 auf der Innenseite des Rahmens umfänglich an. In den Halteschlitz 12 greifen Schrauben oder andere Befestigungsmittel ein, die mit den Dachsparren verschraubt sind und den Rahmen samt Kollektormodul halten.

In Figur 2 ist ein weiteres Ausführungsbeispiel gezeigt. Gleiche Teile sind gegenüber Figur 1 mit den gleichen Bezugszeichen versehen. Das in Figur 2 gezeigte Ausführungsbeispiel unterscheidet sich zum einen dadurch von dem vorher beschriebenen Ausführungsbeispiel, dass zwischen den zwei Einschubschlitzen 24, 28 und der Anlagefläche 2 eine sich zu der äußeren Profilseite 4 öffnende Ausnehmung 40 vorgesehen ist. In diese Ausnehmung 40 können Befestigungsmittel, insbesondere an der Unterseite eines aus dem Kollektorrahmenprofil gebildeten Rahmens eingreifen, um den Rahmen zusammen mit dem Kollektormodul zu halten und insbesondere um ein Abrutschen des Rahmens zusammen mit dem Kollektor zu verhindern.

Anstelle der in Figur 1 gezeigten Aufnahmerinne weist das in Figur 2 gezeigte Ausführungsbeispiel einen die Abdeckfläche 8 durchsetzenden Halteschlitz 42 auf, der sich etwa bis zu der Wandung 27 zwischen dem unteren und dem oberen Einschubschlitz 24, 28 erstreckt. Die sich gegenüberliegenden Wandungen des Halteschlitzes 42 sind gezackt ausgebildet, um ein Eingreifen einer in den Halteschlitz 42 eingebrachten Schraube zu ermöglichen.

Bei den in den Figuren 1 und 2 gezeigten Ausführungsbeispiel haben sämtliche Wandungen des Profiles in etwa die gleiche Wandstärke.

### Bezugszeichenliste

- 2: untere Anlagefläche
- 4: äußere Profilseite
- 6: innere Profilseite
- 8: Abdeckfläche
- 10: Steg
- 12: Befestigungsnut
- 14: Befestigungskanal
- 16: L-förmige Anlagefläche
- 18: Dichtlippenhaltenut
- 20: Vorsprung
- 22: Abflachung
- 24: unterer Einschubschlitz
- 26: Rastnase
- 27: Wandung
- 28: oberer Einschubschlitz
- 30: Abflachung
- 32: Rastnase
- 34: Aufnahmerinne
- 40: Ausnehmung
- 42: Halteschlitz

## Patentansprüche

1. Kollektorrahmenprofil mit einer unteren Anlagefläche (2), einer sich hierzu im wesentlichen rechtwinklig erstreckenden äußeren Profilseite (4), die zwei sich seitlich öffnende Einschubschlitze (24, 28) aufweist, die übereinander angeordnet ist, und mit einer sich im wesentlichen rechtwinklig zu der unteren Anlagefläche (2) erstreckenden inneren Profilseite (6), die eine mit Abstand zu der Anlagefläche (2) angeordnete, sich seitlich öffnende Dichtlippenhaltenut (18) aufweist, wobei der entfernt von der Anlagefläche (2) angeordnete, obere Einschubschlitz (28) sowie der Dichtlippenhalteschlitz (18) von einer oberen Abdeckfläche (8) überragt sind.

2. Kollektorrahmenprofil nach Anspruch 1, **gekennzeichnet durch** eine sich zu der unteren Anlagefläche (2) öffnende Befestigungsnut (12).

3. Kollektorrahmenprofil nach Anspruch 1 oder 2, **dadurch gekennzeichnet, dass** die innere Profilseite (6) von einem die untere Anlagefläche (2) fortsetzenden Steg (10) überragt ist, der mit einem Teilbereich der inneren Profilseite (6) eine L-förmige Anlagefläche (16) ausbildet.

4. Kollektorrahmenprofil nach Anspruch 3, **dadurch gekennzeichnet, dass** die Einschubschlitze (24, 28) an ihrer Öffnung jeweils eine Rastnase (26, 32) aufweisen.

5. Kollektorrahmenprofil nach einem der vorherigen Ansprüche, **dadurch gekennzeichnet, dass** die Abdeckfläche (8) eine Aufnahmerinne (34) aufweist.

6. Kollektorrahmenprofil nach einem der vorherigen Ansprüche, **gekennzeichnet durch** einen sich zu der Abdeckfläche (8) öffnenden Halteschlitz (42).

7. Kollektorrahmenprofil nach Anspruch 6, **dadurch gekennzeichnet, dass** die sich gegenüberliegenden Seitenwände des Halteschlitzes (42) gezackt profiliert sind.

8. Kollektorrahmenprofil nach einem der vorherigen Ansprüche, **dadurch gekennzeichnet, dass** zwischen den zwei Einschubschlitzen (24, 28) und der unteren Anlagefläche (2) eine sich zu der äußeren Profilseite öffnende Ausnehmung (40) vorgesehen ist.

9. Kollektorrahmenprofil nach einem der vorherigen Ansprüche, **dadurch gekennzeichnet, dass** der Übergang zwischen der Abdeckfläche (8) und den Profilseiten (4,6) abgeflacht ausgebildet ist.

10. Kollektorrahmenprofil nach einem der vorherigen Ansprüche, **dadurch gekennzeichnet, dass** die Einschubschlitze (24, 28) sowie der Dichtlippenhalteschlitz (18) sich im wesentlichen parallel zu der unteren Anlagefläche (2) erstrecken.

11. Röhrenkollektor mit Kollektorröhren sowie einem den Kollektorröhren zugeordneten Reflektor, welcher einfallende Strahlung auf die Kollektorröhren reflektiert, **gekennzeichnet durch** einen den Reflektor umgebenden Rahmen gebildet aus einem Kollektorrahmenprofil nach einem der vorherigen Ansprüche, wobei eine an der Reflektoroberseite anliegende Dichtlippe in der Dichtlippenhaltenut (18) gehalten ist.
